# EUROPEAN PATENT SPECIFICATION

(11) **EP 3 861 858 B1**
(45) Date of publication and mention of the grant of the patent: **02.04.2025**
(21) Application number: 20382078.2
(22) Date of filing: 06.02.2020
(51) Int. Cl.: A01N 59/16, A01N 59/00, A01P 3/00, A01P 7/02, A01P 7/04, A01P 1/00

(54) **COMPOSITION FOR THE PROTECTION OF AGRICULTURAL CROPS**
ZUSAMMENSETZUNG ZUM SCHUTZ LANDWIRTSCHAFTLICHER KULTUREN
COMPOSITION POUR LA PROTECTION DES CULTURES AGRICOLES

(43) Date of publication of application: 11.08.2021
(73) Proprietor: Fertilizantes Del Valle Del Ebro, S.L., 25181 Soses (Lleida) (ES)
(72) Inventor: ARTIGAS PUERTO, RAMON, 25001 LLEIDA (ES)
(74) Representative: Durán-Corretjer, S.L.P.

(56) References cited:
- WO-A1-2012/151407
- ES-A1- 2 386 125
- ADRIAN THOMAS: "Waterborne Silicates in Coatings and Construction Chemicals", 48TH ANNUAL SURFACE COATINGS ASSOCIATION AUSTRALIA (SCAA) CONFERENCE 2008, 7 August 2008 (2008-08-07), North Wollongog, Australia, pages 1 - 37, XP055267408
- T. F. BEKKER ET AL: "In-vitro inhibition of mycelial growth of several phytopathogenic fungi by soluble potassium silicate", SOUTH AFRICAN JOURNAL OF PLANT AND SOIL, vol. 23, no. 3, 1 January 2006 (2006-01-01), pages 169 - 172, XP055713749, ISSN: 0257-1862, DOI: 10.1080/02571862.2006.10634750
- YANAR YUSUF ET AL: "Control of powdery mildew (Leveillula taurica) on tomato by foliar sprays of liquid potassium silicate (K2SiO3)", AFRICAN JOURNAL OF BIOTECHNOLOGY, vol. 10, no. 16, 11 April 2011 (2011-04-11), pages 3121 - 3123, XP055713747, DOI: 10.5897/AJB11.215

## Description

The present invention relates to the sector of agricultural crop protection. In particular, it relates to a composition with biocidal properties which provides resistance and protects crops in situations of biotic and abiotic stress, which comprises an aqueous dispersion of photocatalytic particles of titanium dioxide and soluble silicon, and to the use thereof.

At present, the global population is growing and with it, the demand for food. The availability of arable land is limited, particularly in areas close to large conurbations. There is therefore a need to increase the yield and the nutritional value of crops. Under these requirements the use and, on occasion, the abuse, of fertilisers and pesticides has grown. Strategies have therefore been developed to increase effectiveness in the fight against many diseases and pests that damage crops. To do this, products that are intrinsically toxic to humans and which may have a negative impact on ecosystems have been used and continue to be used.

The use of chemical fertilisers and pesticides has a negative effect on the environment which is comprehensively proven and unquestionable. Their use carries a high risk of environmental damage, such as the contamination of groundwater and of the land to which these fertilisers are applied.

It is clear that as unsustainable agricultural practices increase, the health of the land is being eroded, aquifers are being contaminated and crops depend on ever-greater chemical inputs. For these reasons, it is important to find solutions based on the use of compositions that do not have said negative effects.

To overcome said problems, the inventors of the present invention have developed a composition with biocidal properties that is not harmful to the environment and that does not result in residues on the crops to which they are applied, while also being safer for the persons who apply and consume said composition. Moreover, said composition is non-specific and therefore does not produce resistance in the microorganisms.

Another advantage of the composition of the present invention is that is simplifies the work of the farmer and reduces the costs associated with the use of specific treatments with insecticides, acaricides and fungicides, among others, to protect the crop from various pests and diseases.

The composition of the present invention is environmentally safe and provides resistance in situations of biotic and abiotic stress and, in addition, has a biocidal effect on exposure to sunlight or to any source of natural or artificial light, whether direct or dispersed.

In particular, the present invention relates to an aqueous dispersion which contains photocatalytic titanium dioxide (TiO₂) and soluble silicon (Si). In the synergic effect of the mixture, the silicon acts systemically by increasing the vigour and intrinsic resistance of the plant while the function of the TiO₂ is to protect from the outside by producing, on being irradiated, hydroxyl and hydroperoxyl radicals which destroy the cell structures of microorganisms and arthropods that attempt to parasitise said plant.

TiO₂, which is a common constituent among the minerals found in igneous rocks, has four crystalline phases of which only those of the tetragonal structure (anatase and rutile) are photoactive. In the anatase phase, which is far more photoactive than the rutile phase, the gap between the valence band and the conduction band is 3.2 eV, and therefore only photons (hυ) with greater or equal energy, corresponding to ultraviolet light with a wavelength of λ < 380 nm, will produce holes (h⁺).

In the presence of air and water vapour, the photocatalyst, on being irradiated, continuously produces significant quantities of hydroxyl (*OH) and hydroperoxyl (HO₂*) radicals in the following reaction sequence:
TiO₂ + hυ → h⁺ + e⁻

   (electron-hole pair generated on impacting a photon)
H₂O ← → H⁺ + ⁻OH

   (ionic equilibrium of water)
h⁺ + ⁻OH → *OH

   (hydroxyl radical)
e⁻+ O₂ → ⁻O₂

   (superoxide anion)
H⁺ + ⁻O₂ → HO₂*
(hydroperoxyl radical)

The hydroxyl radical is the second species in oxidising power after fluorine (F₂) and can damage many macromolecules, particularly lipids and proteins. Similarly, the hydroxyperoxyl radical is an important initiator of the peroxidation of lipids and, in particular, of those present in the cell membranes. The action of both free radicals allows infectious processes such as mycosis, bacteriosis and some viroses to be slowed by attacking the cell membranes and causing the functional disruption of the microorganism. In the same way, insects and mites in any of their phases of development, also experience lesions that compromise their survival on contact with said radicals. To sum up, owing to its oxidising potential, the composition according to the present invention has a significant biocidal effect on microorganisms and arthropods.

Both anatase and rutile can be doped to reduce the gap between the valence band and the conduction band, which facilitates their photocatalytic activity in the visible light spectrum.

The question of TiO₂ doping to increase its activity in the visible range may be of interest depending on the latitude (little sunshine), when the crops are growing in shady or not very sunny areas (urban gardens) and particularly if irradiation has to be carried out with artificial light in the yellow-red spectrum (greenhouses, growth chambers) to extend the photoperiods and induce flowering in ornamental plants or to increase the growth of vegetable plants.

The choice of TiO₂ over other similar photocatalysts such as oxides of zinc (ZnO), cerium (CeO₂) or tungsten (WO₃) does not imply a limitation of the present invention as it only meets criteria of innocuousness, cost and availability.

As part of the invention, the biocidal effect due to the photocatalysing action is complemented and reinforced by facilitating the assimilation of soluble Si by the plant.

On average, plants require 50 kg to 200 kg of Si per hectare for each cultivation cycle. Some of the most important crops for human nutrition, such as sugar cane, rice, wheat, beans and maize are very Si-demanding. However, although Si is the second most abundant and widely dispersed element in the crust of the Earth, it is found mainly in insoluble form and cannot be assimilated by the plant.

Feeding with soluble Si, both through the leaves and through the roots, increases the assimilation of CO₂ during photosynthesis as it causes greater production of chlorophyll and of the enzyme RuBisCO, which regulates CO₂ capture and promotes its efficient use in plants, increasing the storage capacity of carbohydrates, which are essential for growth and crop yield.

The accumulation of Si in the epidermis of the plant in polymeric, organic and crystalline form provides the plant with mechanical and biochemical protection, which makes said plant more resistant to biotic and abiotic stress.

Si, deposited as amorphous hydrated silica (SiO₂.nH₂O) in intercellular or intracellular spaces, gives plant structures, and particularly the epidermis, a shield which not only wears down the mastication system of insects and prevents the penetration of fungus hyphae, but also thermally insulates said plant structures. Si therefore facilitates self-defence against diseases caused by fungi and bacteria and boosts resistance to attacks by insects, mites and nematodes and also to bad weather.

Moreover, various studies point to Si in defence mechanisms that attract the predators and parasites of pests, which the plant activates when attacked. Indeed, it has been shown that plants treated with Si attract more 'natural enemies' of the attacking arthropods, which results in greater biological control in the field. The intensification of the 'cry for help' from the plant, creating what is known as the tritrophic effect, is because the presence of soluble Si increases the production of the jasmonic acid and phytohormones that induce transcription of the genes involved in plant defence metabolism in stress situations, which, in turn, stimulates the synthesis of volatile compounds induced by herbivore attack, thus alerting its 'enemies'.

The components of the composition according to the present invention complement one another by acting synergically, as shown in the examples section.

In the present invention, the term 'weight ratio (Wr)' refers to the weight/weight ratio between two chemical species or elements present in a formulation. In particular, in the present invention said term refers to the weight ratio of silicon oxide and potassium oxide in potassium orthosilicate (K₂O·SiO₂).

The present invention discloses a biocidal composition for agricultural crops, which comprises a photocatalytic material in the form of titanium dioxide at a concentration of 2% to 4% (w/w) and a soluble silicon in the form of potassium orthosilicate (KSIL or K₂O·SiO₂) with an SiO₂ concentration of between 0.1% and 25% (w/w).

Preferably, said potassium orthosilicate has a SiO₂ concentration of between 10% and 15% (w/w).

The weight ratio of the potassium orthosilicate (SiO₂/K₂O) of the present composition is between 1.6 and 2.5. More preferably, the weight ratio of the potassium orthosilicate (SiO₂/K₂O) of the present composition is between 2 and 2.2.

In addition, the present invention discloses the use of the above-mentioned composition on agricultural crops against attacks by insects, mites, fungi and bacteria. Preferably, said composition is applied directly or diluted in water depending on the crop or portion thereof to be protected. Preferably, the dilution in water that may be employed, depending on use, is between 1 and 1/500. More preferably, the dilution in water is 1/100. For example, said composition is used without dilution to protect pruning cuts and grafts thus forming a photoactive breathable barrier which prevents microbial infections from occurring.

Preferably, the composition according to the present invention is applied between 4 and 10 times at a frequency of between 15 and 30 days.

Preferably, the composition is used in the protection of agricultural crops against insects such as Thysanoptera, Hemiptera, Lepidoptera, Homoptera and Coleoptera.

Preferably, the composition is used in the protection of agricultural crops against attacks by mites such as the red spider mite.

Preferably, the composition is used in the protection of agricultural crops against attacks by fungi such as oidium (powdery mildew), apple scab and Monilia.

Preferably, the composition is used in the protection of agricultural crops against attacks by bacteria such as Xanthomonas.

Preferably, the composition is used to seal and protect lesions and cuts such as those produced by pruning, grafts, branches, hail and mammal attacks and thus avoid the risk of microbial infection.

The present invention is illustrated below using examples, which do not constitute a limitation thereof.

### EXAMPLES

The trials described were carried out on crops located in Catalonia and Aragon, Spain. The results are expressed as a percentage mortality compared to an untreated control (natural mortality). The synergic effect is assessed by comparing the efficacy of TiO₂ and KSIL separately with the formulated product that results from combining both products.

EXAMPLE 1: Effect of the composition according to the present invention on insects of the order Thysanoptera.

Females of the order Thysanoptera lay eggs on the tissues of the host plant where, when the ambient temperature is high, the eggs hatch, producing larvae that suck the cell liquid out of the leaves, petals, buds and fruit. Thrips are carriers of viruses, principally of the genus Tospovirus, which helps exacerbate the damage produced by the insect.

To carry out this trial, compositions were prepared containing 3% TiO₂ and 14% SiO₂. Said compositions were diluted before use at a dilution of 1/100, and the composition was applied every 25 days for a total of 6 treatments. Next, the effect was evaluated as a % of mortality.

| CROP | NECTARINE |
|---|---|
| PEST OR DISEASE | Thrips larvae |
| TRIAL SAMPLE | 20 trees |
| No. OF TREATMENTS | 6 (by spraying) |
| FORMULATION | TiO₂ (3%) + KSIL (14% SiO₂, Rp 2.1) |
| DILUTION PRIOR TO USE | 1/100 |
| FREQUENCY | 1 treatment every 25 days |
| TREATMENT STARTED | Phenological stage C (calyx visible) |
| TREATMENT ENDED | July 25 |

The percentage of mortality produced by KSIL was 45% while the percentage of mortality produced by TiO2 was 35%, achieving a synergic effect of 90% of mortality.

| PRODUCT | % OF MORTALITY |
|---|---|
| KSIL (14% SiO₂, Rp 2.1) | 45 |
| TiO₂ (3%) | 35 |
| FORMULATION | 90 |

EXAMPLE 2: Effect of the composition according to the present invention on aphids of the order Hemiptera order.

Aphids, commonly known as greenflies, belong to the order Hemiptera order. Said aphids extract plant sap using their mouthparts, which have a stylet that can cut through the epidermis of the host and reach the phloem. As well as parasitising their host, said aphids act as vectors for the transmission of other phytopathogenic agents, in particular viruses.

Some aphids have developed a symbiotic relationship with ants, which protect said aphids from specialised predators, such as ladybirds, in exchange for the sugary secretion, which is a product of their digestion and is excreted through the anus. This 'honeydew' is also the ideal medium for the growth of a wide variety of fungi, which form an opaque barrier on the leaves, preventing said leaves from making use of all the incident light, thus limiting photosynthesis.

To carry out this trial, compositions were prepared containing 2% TiO₂ and 20% SiO₂. Said compositions were diluted before use at a dilution of 1/100, and the composition was applied every 25 days for a total of 5 treatments. Next, the effect was evaluated as a % of mortality.

| CROP | PEACH |
|---|---|
| PEST OR DISEASE | Green peach aphid (*Myzus persicae*) |
| TRIAL SAMPLE | 20 trees |
| No. OF TREATMENTS | 5 (by spraying) |
| FORMULATION | TiO₂ (2%) + KSIL (20% SiO₂, Rp 2.1) |
| DILUTION PRIOR TO USE | 1/100 |
| FREQUENCY | 1 treatment every 25 days |
| TREATMENT STARTED | Phenological stage C (calyx visible) |
| TREATMENT ENDED | July 1 |

The percentage of mortality produced by KSIL was 25% while the percentage mortality produced by TiO2 was 65%, achieving a synergic effect of 98% of mortality.

| PRODUCT | % OF MORTALITY |
|---|---|
| KSIL (20% SiO₂, Rp 2.1) | 25 |
| TiO₂ (2%) | 65 |
| FORMULATION | 98 |

EXAMPLE 3: Effect of the composition according to the present invention on *Cacopsylla pyri.*

Psyllids *(Cacopsylla pyri*) belong to the order Hemiptera order and are mainly responsible for pear tree infestations. Pest control is problematic due to the scarcity of effective active compounds and the growing resistance thereto.

The nymphs and adults of *Cacopsylla pyri* feed on the phloem of the host, causing a general weakening of the affected tree, a reduction in flower induction and in the consequent fruit production which in turn loses value due to bite marks. In addition, the insect releases honeydew which attracts saprophytic fungi such as sooty mould, causing reduced photosynthesis which adversely affects the appearance of the fruit adding to the loss in value.

In this case, compositions were prepared containing 3% TiO₂ and 14% SiO₂. Said compositions were diluted before use at a dilution of 1/100, and the composition was applied every 25 days for a total of 6 treatments. Next, the effect was evaluated as a % of mortality.

| CROP | BLANQUILLA PEAR |
|---|---|
| PEST OR DISEASE | Nymphs and adult psyllids |
| TRIAL SAMPLE | 20 trees |
| No. OF TREATMENTS | 6 (by spraying) |
| FORMULATION | TiO₂ (3%) + KSIL (14% SiO₂, Rp 2.1) |
| DILUTION PRIOR TO USE | 1/100 |
| FREQUENCY | 1 treatment every 25 days |
| TREATMENT STARTED | Phenological stage D (appearance of flower buds) |
| TREATMENT ENDED | July 25 |

The percentage of mortality produced by KSIL was 32% while the percentage of mortality produced by TiO2 was 48%, achieving a synergic effect of 98% of mortality.

| PRODUCT | % OF MORTALITY |
|---|---|
| KSIL (14% SiO₂, Rp 2.1) | 32 |
| TiO₂ (3%) | 48 |
| FORMULATION | 98 |

EXAMPLE 4: Effect of the composition according to the present invention on *Cydia pomonella.*

The codling moth (*Cydia pomonella*), an insect belonging to the order Lepidoptera order, is the main pest of apple trees and the second most important pest of pear trees. It is difficult to control and damage may affect the entire harvest.

The codling moth reproduces on average three times a year. Once said moths mate, they lay eggs, usually on the leaves. When the egg hatches, the newborn larva begins to search for a fruit to crawl into. Once the larva penetrates the fruit, it feeds thereon and does not emerge until its larval development is complete, so that action must be taken at the mating, laying and hatching stages and on newborn larvae before said larvae enter the fruit.

To check this effect on *Cydia pomonella,* compositions were prepared containing 4% TiO₂ and 13% SiO₂. Said compositions were diluted before use at a dilution of 1/100, and the composition was applied every 25 days for a total of 6 treatments. Next, the effect was evaluated as a % of mortality.

| CROP | GOLDEN APPLE |
|---|---|
| PEST OR DISEASE | Codling moth larva |
| TRIAL SAMPLE | 20 trees |
| No. OF TREATMENTS | 6 (by spraying) |
| FORMULATION | TiO₂ (4%) + KSIL (13% SiO₂, Rp 2.0) |
| DILUTION PRIOR TO USE | 1/100 |
| FREQUENCY | 1 treatment every 25 days |
| TREATMENT STARTED | Phenological stage H (petal fall) |
| TREATMENT ENDED | August 25 |

The percentage of mortality produced by KSIL was 24% while the percentage mortality produced by TiO2 was 66%, achieving a synergic effect of 96% of mortality.

| PRODUCT | % OF MORTALITY |
|---|---|
| KSIL (13% SiO₂, Rp 2.0) | 24 |
| TiO₂ (4%) | 66 |
| FORMULATION | 96 |

EXAMPLE 5: Effect of the composition according to the present invention on *Quadraspidiotus perniciosus.*

San José scale (*Quadraspidiotus perniciosus*) belongs to the order Homoptera order and affects stone and pome fruit trees. It produces a general weakening of the tree and a reduction in the crop by sucking sap and blocking the stomata. The fruit loses commercial value simply by its presence and the reddish haloes left round the area to which said scale was previously attached.

To quantify the effect of the composition on *Quadraspidiotus perniciosus,* compositions were prepared containing 4% TiO₂ and 12% SiO₂. Said compositions were diluted before use at a dilution of 1/100, and the composition was applied every 25 days for a total of 4 treatments. Next, the effect was evaluated as a % of mortality.

| CROP | BLANQUILLA PEAR |
|---|---|
| PEST OR DISEASE | SAN JOSÉ SCALE |
| TRIAL SAMPLE | 20 trees |
| No. OF TREATMENTS | 4 (by spraying) |
| FORMULATION | TiO₂ (4%) + KSIL (12% SiO₂, Rp 2.1) |
| DILUTION PRIOR TO USE | 1/100 |
| FREQUENCY | 1 treatment every 25 days |
| TREATMENT STARTED | Phenological stage I (fruit ripens) |
| TREATMENT ENDED | July 25 |

The percentage of mortality produced by KSIL was 20% while the percentage of mortality produced by TiO2 was 62%, achieving a synergic effect of 94% of mortality.

| PRODUCT | % OF MORTALITY |
|---|---|
| KSIL (12% SiO₂, Rp 2.1) | 20 |
| TiO₂ (4%) | 62 |
| FORMULATION | 94 |

EXAMPLE 6: Effect of the composition according to the present invention on *Tuta absoluta.*

The tomato leafminer *(Tuta absoluta)* belongs to the order Lepidoptera order and is the main pest of tomato plants, while also affecting potato crops and other members of the nightshade family (Solonaceae). The female lays eggs on the aerial part of the plant, in particular on the underside of the leaves. After hatching, the larvae pass through four larval stages to then pupate on the ground, on the leaf surface or even inside the stem tunnels, depending on the environmental conditions. Immediately after being born, the larvae penetrate the fruit, the leaves or the stems on which said larvae feed, creating holes and tunnels. The fruits may be attacked after forming, and this may cause said fruit to then rot through the action of secondary pathogens.

Compositions were prepared containing 0.1% TiO₂ and 0.5% SiO₂, the compositions not being part of the invention. Said compositions were not diluted before use, and the composition was applied every 15 days for a total of 9 treatments. Next, the effect was evaluated as a % of mortality.

| **CROP:** | TOMATO |
|---|---|
| **PEST OR DISEASE:** | TOMATO LEAFMINER LARVAE (T. absoluta) |
| **TRIAL SAMPLE:** | 50 plants |
| **No. OF TREATMENTS:** | 9 (by spraying) |
| **FORMULATION** | TiO₂ (0.1%) + KSIL (0.5% SiO₂, Rp 2.1) |
| **DILUTION PRIOR TO USE** | No (RTU formulation) |
| **FREQUENCY** | 1 treatment every 15 days |
| **TREATMENT STARTED** | May 15 |
| **TREATMENT ENDED** | September 15 |

The percentage of mortality produced by KSIL was 52% while the percentage of mortality produced by TiO2 was 34%, achieving a synergic effect of 99% of mortality.

| PRODUCT | % OF MORTALITY |
|---|---|
| KSIL (0.5% SiO₂, Rp 2.1) | 52 |
| TiO₂ (0.1%) | 34 |
| FORMULATION | 99 |

EXAMPLE 7: Effect of the composition according to the present invention on *Cydia molesta.*

The oriental fruit moth (or peach moth) *(Cydia molesta)* belongs to the order Lepidoptera order. It is a pest typical of stone fruit trees, in particular the peach tree. However, when insecticide treatments are reduced, sometimes as a consequence of using sexual confusion techniques to control Carpocapsa, problems may arise in pome fruit trees.

The female lays isolated eggs on the underside of the leaves, on the tender shoots or buds, or close to the fruits.

To test the effect of the composition on *Cydia molesta,* compositions were prepared containing 4% TiO₂ and 13% SiO₂. Said compositions were diluted before use at a dilution of 1/100, and the composition was applied every 25 days for a total of 5 treatments. Next, the effect was evaluated as a % of mortality.

| CROP | PEACH |
|---|---|
| PEST OR DISEASE | Peach moth |
| TRIAL SAMPLE | 20 trees |
| No. OF TREATMENTS | 5 (by spraying) |
| FORMULATION | TiO₂ (4%) + KSIL (13% SiO₂, Rp 2.0) |
| DILUTION PRIOR TO USE | 1/100 |
| FREQUENCY | 1 treatment every 25 days |
| TREATMENT STARTED | Phenological stage H (fruit develops) |
| TREATMENT ENDED | August 20 |

The percentage of mortality produced by KSIL was 26% while the percentage of mortality produced by TiO2 was 60%, achieving a synergic effect of 99% of mortality.

| PRODUCT | % OF MORTALITY |
|---|---|
| KSIL (13% SiO₂, Rp 2.1) | 26 |
| TiO₂ (4%) | 60 |
| FORMULATION | 99 |

EXAMPLE 8: Effect of the composition according to the present invention on *Anarsia lineatella.*

The peach twig borer *(Anarsia lineatella)* belongs to the order Lepidoptera order and feeds on shoots, buds and fruits of stone fruit trees and particularly on peach trees and nectarine trees.

The female lays eggs individually, and the caterpillars appear after two weeks. Said caterpillars attack the fruits, which are already present on the tree, excavating feeding tunnels inside said fruits, which causes premature fall and loss of commercial value of those that are worm-eaten when harvested. In addition, the buds are in danger of being attacked by the caterpillars, which make their way inside, causing desiccation, which is even more serious in young plantings and in regrafts.

To test the effect of the composition on *Anarsia lineatella,* compositions were prepared containing 2% TiO₂ and 15% SiO₂. Said compositions were diluted before use at a dilution of 1/100, and the composition was applied every 30 days for a total of 6 treatments. Next, the effect was evaluated as a % of mortality.

| CROP | PEACH |
|---|---|
| PEST OR DISEASE | Peach twig borer |
| TRIAL SAMPLE | 20 trees |
| No. OF TREATMENTS | 6 (by spraying) |
| FORMULATION | TiO₂ (2%) + KSIL (15% SiO₂, Rp 2.1) |
| DILUTION PRIOR TO USE | 1/100 |
| FREQUENCY | 1 treatment every 30 days |
| TREATMENT STARTED | Phenological stage C (calyx visible) |
| TREATMENT ENDED | August 20 |

The percentage of mortality produced by KSIL was 44% while the percentage of mortality produced by TiO2 was 36%, achieving a synergic effect of 99% of mortality.

| PRODUCT | % OF MORTALITY |
|---|---|
| KSIL (15% SiO₂, Rp 2.1) | 44 |
| TiO₂ (2%) | 36 |
| FORMULATION | 99 |

EXAMPLE 9: Effect of the composition according to the present invention on *Rhynchophorus ferrugineus.*

The red palm weevil *(Rhynchophorus ferrugineus)* belonging to the order Coleoptera order is a beetle originating from tropical Asia. Its larvae drill deep tunnels in the host plants, compromising the survival of said plants.

The host plants belong basically to the palm family, including productive species such as *Cocos nucifera* (coconut palm), *Elaeis guineensis* (oil palm) and *Phoenix dactylifera* (date palm), and ornamental species such as *Phoenix canariensis* (Canary Island date palm), although other species that are not members of this family, such as the European fan palm *Chamaerops humilis,* which is of commercial interest, are also attacked.

Control of this pest is complicated and requires a combination of different preventive and curative techniques, resulting as a last resort in eliminating the affected trunks and those that might be affected to prevent the insect from propagating.

The treatments are almost always carried out in spring and summer, to coincide with the period of greatest pest activity.

To test the effect of the composition on *Rhynchophorus ferrugineus,* compositions were prepared containing 3% TiO₂ and 14% SiO₂. Said compositions were diluted before use at a dilution of 1/100, and the composition was applied every 30 days for a total of 8 treatments. Next, the effect was evaluated as a % of mortality.

| CROP | CANARY ISLAND DATE PALM |
|---|---|
| PEST OR DISEASE | Red palm weevil |
| TRIAL SAMPLE | 10 trees |
| No. OF TREATMENTS | 8 (by spraying) |
| FORMULATION | TiO₂ (3%) + KSIL (14% SiO₂, Rp 2.1) |
| DILUTION PRIOR TO USE | 1/100 |
| FREQUENCY | 1 treatment every 30 days |
| TREATMENT STARTED | February 15 |
| TREATMENT ENDED | September 15 |

The percentage of mortality produced by KSIL was 32% while the percentage if mortality produced by TiO2 was 38%, achieving a synergic effect of 90% of mortality.

| PRODUCT | % OF MORTALITY |
|---|---|
| KSIL (14% SiO₂, Rp 2.1) | 32 |
| TiO₂ (3%) | 38 |
| FORMULATION | 90 |

EXAMPLE 10: Effect of the composition according to the present invention on *Tetranychus urticae.*

The red spider mite, whose scientific name is *Tetranychus urticae,* is a mite, but was given the name 'spider' due to its ability to spin webs. Its presence is devastating to any crop where it appears as it absorbs the cell contents of the plant, weakening it and reducing its ability to photosynthesise. Infestation is very rapid, and said mite may colonise a planting in a short time due to its high reproductive capacity. In addition, it leaves the crop completely vulnerable to attack by various pathogens, such as fungi or bacteria.

It may be present in many different crop types, mostly cucurbits, nightshades, vines, fruit trees, citrus fruits and even ornamental plants.

The red spider mite is usually found on the underside of leaves, as this is the most porous and accessible area in which to feed. When a red spider mite attack coincides with high temperatures or water stress, serious defoliation and a drastic reduction in the number of flowers may result.

To check the effect of the composition on *Tetranychus urticae,* compositions were prepared containing 3% TiO₂ and 14% SiO₂. Said compositions were diluted before use at a dilution of 1/100, and the composition was applied every 30 days for a total of 5 treatments. Next, the effect was evaluated as a % of mortality.

| CROP | PEACH TREES |
|---|---|
| PEST OR DISEASE | Red spider mite |
| TRIAL SAMPLE | 20 trees |
| No. OF TREATMENTS | 5 (by spraying) |
| FORMULATION | TiO₂ (3%) + KSIL (14% SiO₂, Rp 2.1) |
| DILUTION PRIOR TO USE | 1/100 |
| FREQUENCY | 1 treatment every 30 days |
| TREATMENT STARTED | Phenological stage H (fruit develops) |
| TREATMENT ENDED | August 25 |

The percentage of mortality produced by KSIL was 42% while the percentage of mortality produced by TiO2 was 41%, achieving a synergic effect of 97% of mortality.

| PRODUCT | % OF MORTALITY |
|---|---|
| KSIL (14% SiO₂, Rp 2.1) | 42 |
| TiO₂ (3%) | 41 |
| FORMULATION | 97 |

EXAMPLE 11: Effect of the composition according to the present invention on the disease oidium.

Oidium refers to a cryptogamic disease of plants produced by various genuses of ectoparasitic fungi of the family Erisiphaceae family, which mainly attack young leaves and stems. One of the best known is the genus that affects vines. Oidium diseases are common in cucurbits (melons, cucumbers, etc.), strawberries and tomato plants. The fruit trees most affected are apple, peach, plum and apricot trees.

To quantify the effect of the composition on the oidium disease, compositions were prepared containing 2% TiO₂ and 10% SiO₂. Said compositions were diluted before use at a dilution of 1/100, and the composition was applied every 25 days for a total of 4 treatments. Next, the effect was evaluated as a % of mortality.

| CROP | VINE |
|---|---|
| PEST OR DISEASE | Oidium |
| TRIAL SAMPLE | 40 plants |
| No. OF TREATMENTS | 4 (by spraying) |
| FORMULATION | TiO₂ (2%) + KSIL (10% SiO₂, Rp 2.1) |
| DILUTION PRIOR TO USE | 1/100 |
| FREQUENCY | 1 treatment every 25 days |
| TREATMENT STARTED | Phenological stage F (grape clusters visible) |
| TREATMENT ENDED | August 5 |

The percentage mortality of produced by KSIL was 58% while the percentage of mortality produced by TiO2 was 30%, achieving a synergic effect of 100% of mortality.

| PRODUCT | % OF MORTALITY |
|---|---|
| KSIL (10% SiO₂, Rp 2.1) | 58 |
| TiO₂ (2%) | 30 |
| FORMULATION | 100 |

EXAMPLE 12: Effect of the composition according to the present invention on apple scab.

Apple scab in pome fruit trees is among the cryptogamic diseases that causes the greatest economic damage in apple and pear orchards worldwide. In stone fruit trees, scab is important in peach and nectarine trees, and also appears occasionally in plum and apricot trees.

The disease is caused by the *Venturia inaequalis* fungus. Whilst its action on leaves may reduce yields, the most serious damage occurs when the fruit is attacked, affecting its development, quality and preservation in storage with the consequent loss of profits for the fruit grower.

To test the effect of the present composition on scab diseases, compositions were prepared containing 2% TiO₂ and 10% SiO₂. Said compositions were diluted before use at a dilution of 1/100, and the composition was applied every 30 days for a total of 6 treatments. Next, the effect was evaluated as a % of mortality.

| CROP | PEAR TREES |
|---|---|
| PEST OR DISEASE | Scab |
| TRIAL SAMPLE | 20 trees |
| No. OF TREATMENTS | 6 (by spraying) |
| FORMULATION | TiO₂ (2%) + KSIL (10% SiO₂, Rp 2.1) |
| DILUTION PRIOR TO USE | 1/100 |
| FREQUENCY | 1 treatment every 30 days |
| TREATMENT STARTED | Phenological stage D (appearance of flower buds) |
| TREATMENT ENDED | July 20 |

The percentage of mortality produced by KSIL was 46% while the percentage of mortality produced by TiO2 was 32%, achieving a synergic effect of 99% of mortality.

| PRODUCT | % OF MORTALITY |
|---|---|
| KSIL (10% SiO₂, Rp 2.1) | 46 |
| TiO₂ (2%) | 32 |
| FORMULATION | 99 |

EXAMPLE 13: Effect of the composition according to the present invention on Monilia disease.

Moniliosis (brown rot) is a cryptogamic disease of fruit trees caused by two species of fungi of the genus Monilinia also known as Monilia. Moniliosis penetrates the fruit through lesions caused by insect and bird bites, by hail and by branches on windy days. A humid climate during the flowering season encourages the appearance of moniliosis.

The affected fruits have brown patches and white spots distributed in concentric circles. Those that do not fall end up mummified.

Moniliosis is also responsible for significant post-harvest losses, particularly when the fruit is not kept refrigerated.

To test the effect of the present composition on moniliosis, compositions were prepared containing 2% TiO₂ and 10% SiO₂. Said compositions were diluted before use at a dilution of 1/100, and the composition was applied every 30 days for a total of 7 treatments. Next, the effect was evaluated as a % of mortality.

| CROP | PEACH |
|---|---|
| PEST OR DISEASE | Monilia |
| TRIAL SAMPLE | 20 trees |
| No. OF TREATMENTS | 7 (by spraying) |
| FORMULATION | TiO₂ (2%) + KSIL (10% SiO₂, Rp 2.1) |
| DILUTION PRIOR TO USE | 1/100 |
| FREQUENCY | 1 treatment every 30 days |
| TREATMENT STARTED | Phenological stage C (calyx visible) |
| TREATMENT ENDED | August 28 |

The percentage of mortality produced by KSIL was 44% while the percentage of mortality produced by TiO2 was 36%, achieving a synergic effect of 99% of mortality.

| PRODUCT | % OF MORTALITY |
|---|---|
| KSIL (10% SiO₂, Rp 2.1) | 44 |
| TiO₂ (2%) | 36 |
| FORMULATION | 98 |

EXAMPLE 14: Effect of the composition according to the present invention on bacterial spot disease.

Bacterial spot in stone fruit trees and in almond trees is a serious disease caused by *Xanthomonas arboricola pv. Pruni.* It affects cultivated Prunus species and their hybrids, such as peach, nectarine, cherry, apricot, plum and almond trees. It is considered the most serious bacteriosis of stone fruit trees because the affected fruits cannot be sold due to the presence of brown patches, which frequently end up necrotic, with gum exudates. Moreover, the disease produces severe defoliation which weakens the trees and reduces their productivity.

To test its effect, compositions were prepared containing 2% TiO₂ and 10% SiO₂. Said compositions were diluted before use at a dilution of 1/100, and the composition was applied every 25 days for a total of 6 treatments. Next, the effect was evaluated as a % of mortality.

| CROP | PEACH |
|---|---|
| PEST OR DISEASE | Bacterial spot |
| TRIAL SAMPLE | 20 trees |
| No. OF TREATMENTS | 6 (by spraying) |
| FORMULATION | TiO₂ (2%) + KSIL (10% SiO₂, Rp 2.1) |
| DILUTION PRIOR TO USE | 1/100 |
| FREQUENCY | 1 treatment every 25 days |
| TREATMENT STARTED | Phenological stage G (petal fall) |
| TREATMENT ENDED | August 10 |

The percentage of mortality produced by KSIL was 38% while the percentage of mortality produced by TiO2 was 45%, achieving a synergic effect of 96% of mortality.

| PRODUCT | % OF MORTALITY |
|---|---|
| KSIL (10% SiO₂, Rp 2.1) | 38 |
| TiO₂ (2%) | 45 |
| FORMULATION | 96 |

## Claims

1. Biocidal composition for agricultural crops, **characterised in that** it comprises a photocatalytic material in the form of titanium dioxide at a concentration of between 2% to 4% (w/w) and potassium orthosilicate with an SiO₂ concentration of between 0.1% and 25% (w/w.).

2. Composition according to claim 1, **characterised in that** said potassium orthosilicate has a SiO₂ concentration of between 10% and 15% (w/w).

3. Composition according to any one of the preceding claims, **characterised in that** the weight ratio of the potassium orthosilicate (SiO₂/K₂O) is between 1.6 and 2.5.

4. Composition according to claim 3, **characterised in that** the weight ratio of the potassium orthosilicate (SiO₂/K₂O) is between 2 and 2.2.

5. Use of the composition according to any one of claims 1 to 4 in the protection of agricultural crops against attack by insects, mites, fungi and bacteria.

6. Use of the composition according to claim 5 in the protection of agricultural crops against insects such as Thysanoptera, Hemiptera, Lepidoptera, Homoptera and Coleoptera.

7. Use of the composition according to claim 5 in the protection of agricultural crops against attack by mites such as the red spider mite.

8. Use of the composition according to claim 5 in the protection of agricultural crops against attack by fungi such as oidium, powdery mildew and Monilia.

9. Use of the composition according to claim 5 in the protection of agricultural crops against attack by bacteria such as Xanthomonas.

10. Use of the composition according to claim 5 to seal and protect lesions and cuts such as those produced by pruning, grafting, branches, hail and mammal attack and thus avoid the risk of microbial infection.

11. Use of the composition according to any one of claims 5 to 10 in which the composition is in undiluted form.

12. Use of the composition according to any one of claims 5 to 10 in which the composition has a dilution of between 1 and 1/500.

## Patentansprüche

1. Biozid-Zusammensetzung für landwirtschaftliche Nutzpflanzen, **dadurch gekennzeichnet, dass** sie ein photokatalytisches Material in Form von Titandioxid in einer Konzentration zwischen 2 % und 4 % (Gew./Gew.) und Kaliumorthosilikat mit einer SiO2-Konzentration zwischen 0,1 % und 25 % (Gew./Gew.) umfasst.

2. Zusammensetzung gemäß Anspruch 1, **dadurch gekennzeichnet, dass** das Kaliumorthosilikat eine SiO2-Konzentration zwischen 10 % und 15 % (Gew.) aufweist.

3. Zusammensetzung gemäß einem der vorstehenden Ansprüche, **dadurch gekennzeichnet, dass** das Gewichtsverhältnis des Kaliumorthosilikats (SiO₂/K₂O) zwischen 1,6 und 2,5 liegt.

4. Zusammensetzung gemäß Anspruch 3, **dadurch gekennzeichnet, dass** das Gewichtsverhältnis von Kaliumorthosilikat (SiO2/K2O) zwischen 2 und 2,2 liegt.

5. Verwendung der Zusammensetzung gemäß einem der Ansprüche 1 bis 4 zum Schutz von landwirtschaftlichen Kulturen gegen den Befall durch Insekten, Milben, Pilze und Bakterien.

6. Verwendung der Zusammensetzung gemäß Anspruch 5 zum Schutz von landwirtschaftlichen Nutzpflanzen gegen Insekten wie Thysanoptera, Hemiptera, Lepidoptera, Homoptera und Coleoptera.

7. Verwendung der Zusammensetzung gemäß Anspruch 5 zum Schutz von landwirtschaftlichen Nutzpflanzen gegen den Befall durch Milben wie die Rote Spinnmilbe.

8. Verwendung der Zusammensetzung gemäß Anspruch 5 zum Schutz von landwirtschaftlichen Nutzpflanzen gegen den Befall durch Pilze wie Oidium, Echten Mehltau und Monilia.

9. Verwendung der Zusammensetzung gemäß Anspruch 5 zum Schutz von landwirtschaftlichen Nutzpflanzen gegen den Befall durch Bakterien wie Xanthomonas.

10. Verwendung der Zusammensetzung gemäß Anspruch 5 zum Versiegeln und Schützen von Verletzungen und Schnitten, wie sie durch Beschneiden, Pfropfen, Äste, Hagel und Säugetierangriffe entstehen, und somit zur Vermeidung des Risikos einer mikrobiellen Infektion.

11. Verwendung der Zusammensetzung gemäß einem der Ansprüche 5 bis 10, wobei die Zusammensetzung in unverdünnter Form vorliegt.

12. Verwendung der Zusammensetzung gemäß einem der Ansprüche 5 bis 10, wobei die Zusammensetzung eine Verdünnung zwischen 1 und 1/500 aufweist.

## Revendications

1. Composition biocide pour les cultures agricoles, **caractérisée en ce qu'**elle comprend un matériau photocatalytique sous forme de dioxyde de titane à une concentration comprise entre 2 % et 4 % (p/p) et d'orthosilicate de potassium à une concentration de SiO₂ comprise entre 0,1 % et 25 % (p/p).

2. Composition selon la revendication 1, **caractérisée en ce que** l'orthosilicate de potassium a une concentration en SiO₂ comprise entre 10% et 15% (p/p).

3. Composition selon l'une quelconque des revendications précédentes, **caractérisée en ce que** le rapport en poids de l'orthosilicate de potassium (SiO2/K2O) est compris entre 1,6 et 2,5.

4. Composition selon la revendication 3, **caractérisée en ce que** le rapport en poids de l'orthosilicate de potassium (SiO2/K2O) est compris entre 2 et 2,2.

5. Utilisation de la composition selon l'une des revendications 1 à 4 dans la protection des cultures agricoles contre les attaques d'insectes, d'acariens, de champignons et de bactéries.

6. Utilisation de la composition selon la revendication 5 dans la protection des cultures agricoles contre les insectes tels que les thysanoptères, les hémiptères, les lépidoptères, les homoptères et les coléoptères.

7. Utilisation de la composition selon la revendication 5 dans la protection des cultures agricoles contre les attaques d'acariens tels que l'araignée rouge.

8. Utilisation de la composition selon la revendication 5 dans la protection des cultures agricoles contre les attaques de champignons tels que l'oïdium, pourriture blanche et le Monilia.

9. Utilisation de la composition selon la revendication 5 dans la protection des cultures agricoles contre les attaques de bactéries telles que Xanthomonas.

10. Utilisation de la composition selon la revendication 5 pour sceller et protéger les lésions et les coupures telles que celles produites par la taille, la greffe, les branches, la grêle et les attaques de mammifères et éviter ainsi le risque d'infection microbienne.

11. Utilisation de la composition selon l'une quelconque des revendications 5 à 10 dans laquelle la composition est sous forme non diluée.

12. Utilisation de la composition selon l'une quelconque des revendications 5 à 10 dans laquelle la composition a une dilution comprise entre 1 et 1/500.
